# EUROPÄISCHE PATENTSCHRIFT

(11) **EP 0 646 748 B1**
(45) Veröffentlichungstag und Bekanntmachung des Hinweises auf die Patenterteilung: **18.06.1997**
(21) Anmeldenummer: 94113175.7
(22) Anmeldetag: 24.08.1994
(51) Int. Cl.: F16L 27/093, F16L 41/00

(54) **Ringstutzenkupplung für Fluide**
"Banjo" type pipe joint
Raccord du type "banjo"

(30) Priorität: 30.09.1993 DE 9314796 U
(43) Veröffentlichungstag der Anmeldung: 05.04.1995
(73) Patentinhaber: Cohnen Beteiligungs-GmbH & Co. KG, D-35683 Dillenburg (DE)
(72) Erfinder: Cohnen, Wolfgang, D-35683 Dillenburg (DE)
(74) Vertreter: Missling, Arne, Dipl.-Ing.

(56) Entgegenhaltungen:
- EP-A- 0 266 487
- FR-A- 1 064 041
- US-A- 2 307 328

## Beschreibung

Die Erfindung betrifft eine Ringstutzenkupplung für Fluide mit einem beweglichen, hohlen Ringstutzen, der eine Hohlschraube aufnimmt, die Querbohrungen für den Durchtritt des Fluids vom Ringstutzen in die Hohlschraube aufweist und mit auf der Hohlschraube aufgeschobenen zu beiden Seiten des Ringstutzens liegenden Dichtringen.

Derartige Ringstutzenkupplungen für Fluide sind bekannt und werden überall dort eingesetzt, wo Fluidleitungen miteinander verbunden werden müssen, die in beliebigen Winkelstellungen zueinander liegen können. Hierzu besitzen diese Fluidleitungen einen hohlen Ringstutzen, der entweder mit einer Rohr-Schlauchkupplung oder mit einem Schraubgewinde versehen sein kann. Durch diesen hohlen Ringstutzen ist eine Hohlschraube geschoben, die im Bereich des Ringstutzens Querbohrungen aufweist, damit der Fluiddurchtritt gewährleistet ist. Die Abdichtung dieser Hohlschraube wird durch zwei auf der Hohlschraube aufgeschobenen und zu beiden Seiten des Ringstutzens liegenden Dichtscheiben erreicht, die vorteilhaft aus Kupfer bestehen. Beim Einschrauben der Hohlschraube in das entsprechende Aufnahmegewinde der abzweigenden Fluidleitung werden diese Dichtringe gegen die Anlageflächen des Ringstutzens gepreßt, so daß zum einen eine Abdichtung für das Fluid und zum anderen eine Fixierung der Winkelstellung des Ringstutzens zur abgehenden Leitung erhalten wird.

Ferner ist eine Ringstutzenkupplung gemäß dem Oberbegriff des Anspruches 1 aus der EP-A-0 266 487 bekannt, wobei die Einzelteile vormontiert sind.

Bekannt ist es, diese Ringstutzenkupplung in ihren vier Einzelteilen zu liefern, daß heißt, den Ringstutzen, die Hohlschraube sowie die beiden Dichtringe. Der Anwender hat dann vor Montage der Ringstutzenkupplung die Einzelteile zu montieren. Dies stellt zum einen einen relativ aufwendigen Arbeitsvorgang dar und zum anderen besteht die Gefahr, daß Einzelteile verloren gehen können.

Die Erfindung hat sich die Aufgabe gestellt, eine Ringstutzenkupplung der eingangs genannten Art so auszubilden, daß die die Ringstutzenkupplung bildenden Teile vormontiert und unverlierbar miteinander verbunden sind, wobei die Festlegung der Teile zueinander in einfachster und kostengünstiger Weise erfolgen soll.

Diese Aufgabe wird erfindungsgemäß dadurch gelöst, daß der auf der Gewindeseite der Hohlschraube angeordnete Dichtring durch axiale Stauchung auf der Hohlschraube festgelegt ist. Hierdurch ist gewährleistet, daß zum einen die Hohlschraube im Ringstutzen festgelegt ist, wobei die Teile noch gegeneinander leicht verdrehbar sind und zum anderen sämtliche Teile unverlierbar zusammengehalten sind, wobei die zweite Dichtschraube zwischen dem Kopf der Hohlschraube und dem hohlen Ringstutzen unverlierbar gehaltert ist.

Die Festlegung der Teile geschieht in einfachster Art und Weise, und zwar wird nach der Montage der Teile zueinander lediglich der auf der Gewindeseite der Hohlschraube liegende Dichtring in seiner Lage relativ zum Ringstutzen fixiert und anschließend in axialer Richtung leicht derart verformt, daß diese in die Gewindegänge der Hohlschraube eingreift. Hierdurch ist ein Abstreifen und Abdrehen des Dichtringes vom Gewinde der Hohlschraube ausgeschlossen. Der Vorteil ist, daß die Teile nicht nur unverlierbar zusammengehalten sind, sondern daß auch die Montage der Ringstutzenkupplung einfacher erfolgen kann, da nicht mehr der auf dem Gewinde liegende Dichtring beim Einschrauben der Hohlschraube festgehalten werden muß.

Ein Ausführungsbeispiel der Erfindung ist im folgenden anhand der Zeichnung näher beschrieben. In dieser zeigen:

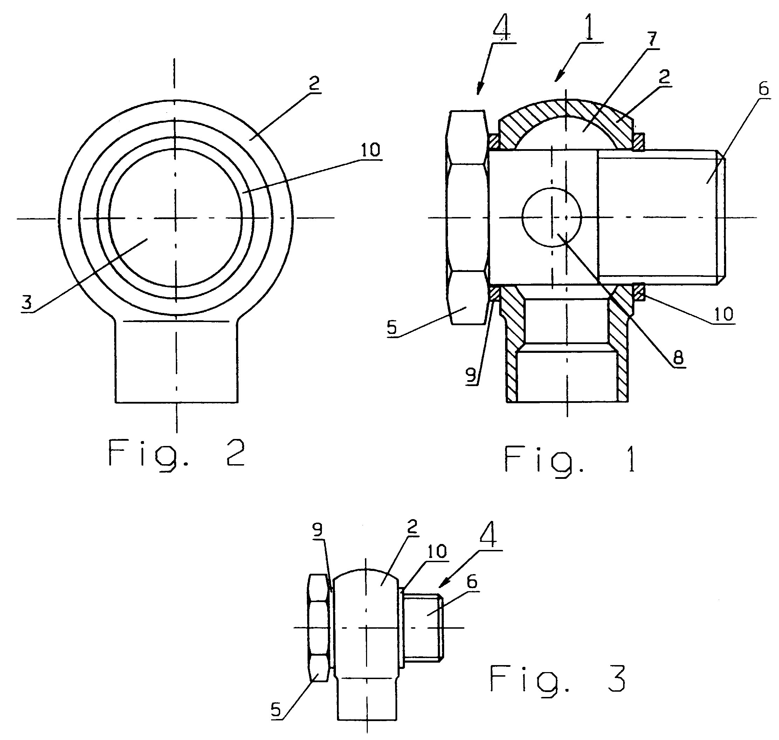

- Fig. 1: eine Seitenansicht einer Ringstutzenkupplung, teilweise im Schnitt,
- Fig. 2: eine Seitenansicht gemäß Fig. 1 und
- Fig. 3: eine Seitenansicht einer erfindungsgemäßen Ringstutzenkupplung.

Die in den Figuren dargestellte Ringstutzenkupplung 1 besteht aus einem hohlen Ringstutzen 2, der eine Bohrung 3 für eine Hohlschraube 4 aufweist. Diese Hohlschraube 4 hat einen Schraubenkopf 5 sowie ein Schraubengewinde 6 und des weiteren im Bereich des Hohlraumes 7 des Ringstutzens 2 mehrere Bohrungen 8, durch die das Fluid aus dem Ringstutzen 2 in die Hohlschraube 4 austreten kann. Zur Abdichtung des Ringstutzens 2 zur Hohlschraube 4 dienen zwei Dichtscheiben 9, 10, die zum einen zwischen dem Kopf 5 der Schraube und dem Ringstutzen 2 und zur anderen Seite auf dem Gewinde 6 dem Ringstutzen 2 benachbart angeordnet sind.

Damit bei der Montage die Hohlschraube 4, die Dichtscheiben 9, 10 und der Ringstutzen 2 unverlierbar gehalten sind, ist die auf dem Gewindeteil 6 liegende Dichtscheibe 10 in axialer Richtung derart gestaucht, daß diese in das Gewinde 6 der Hohlschraube 4 eingreift, so daß diese sicher auf dem Gewinde 6 gehalten ist. Hierdurch wird gleichzeitig verhindert, daß der Ringstutzen 2 und die Hohlschraube 4 sowie die Dichtscheibe 10 voneinander getrennt werden können. Hohlschraube 4 und Ringstutzen 2 sind gleichermaßen noch gegeneinander verdrehbar, so daß die Montage in einfachster Weise erfolgen kann.

## Patentansprüche

1. Ringstutzenkupplung (1) für Fluide mit einem beweglichen, hohlen Ringstutzen (2), der eine Hohlschraube (4) aufnimmt, die Querbohrungen (8) für den Durchtritt des Fluids vom Ringstutzen (2) in die Hohlschraube (4) aufweist und mit auf der Hohlschraube (4) aufgeschobenen zu beiden Seiten des Ringstutzens (2) liegenden Dichtringen (9, 10), dadurch gekennzeichnet, daß der auf der Gewindeseite der Hohlschraube (4) angeordnete Dichtring (10) durch axiale Stauchung auf der Hohlschraube (4) festgelegt ist.

## Claims

1. A banjo-type pipe union (1) for fluids, comprising a movable, hollow banjo connecting piece (2) receiving a banjo bolt (4) provided with transverse bores (8) for the passage of fluid from the banjo connecting piece (2) into the banjo bolt (4), and comprising sealing rings (9, 10) mounted on the banjo bolt (4) and arranged on either side of the banjo connecting piece (2), characterised in that the sealing ring (10) arranged on the threaded end of the banjo bolt (4) is secured thereto by axial compression.

## Revendications

1. Accouplement (1) de raccord annulaire pour fluide, comportant un raccord annulaire creux (2), mobile, qui reçoit une vis creuse (4) qui présente des alésages transversaux (8) pour le passage du fluide du raccord annulaire (2) dans la vis creuse (4), et comportant des bagues d'étanchéité (9, 10) glissées sur la vis creuse (4) et situées des deux côtés du raccord annulaire creux (2),
caractérisé en ce que la bague d'étanchéité (10), disposée du côté fileté de la vis creuse (4), est fixée par emmanchement à force axialement sur la vis creuse (4).
